# EUROPEAN PATENT SPECIFICATION

(11) **EP 2 482 254 B1**
(45) Date of publication and mention of the grant of the patent: **12.03.2014**
(21) Application number: 12152593.5
(22) Date of filing: 26.01.2012
(51) Int. Cl.: G01S 5/00, G06Q 30/00, G07B 15/02

(54) **System and method for vehicle tracking**
System und Verfahren zur Fahrzeugverfolgung
Système et procédé de suivi de véhicule

(30) Priority: 26.01.2011 US 201161436413 P
(43) Date of publication of application: 01.08.2012
(73) Proprietor: The Goodyear Tire & Rubber Company, Akron, OH 44316-0001 (US)
(72) Inventor: Putman, Tristan Sean, Van Buren, AR Arkansas 72956 (US); Honeycutt, Brad Owen, Fort Smith, AR Arkansas 72908 (US); Barthol, Debbie Gay, Fort Smith, AR Arkansas 72908 (US); McWater, Harold Shane, Alma, AR Arkansas 72921 (US); Sutfin, Roy B., Van Buren, AR Arkansas 72956 (US)
(74) Representative: Kutsch, Bernd

(56) References cited:
- WO-A1-2009/025789
- WO-A2-01/46710
- US-A- 6 006 148
- US-A1- 2001 039 509
- US-A1- 2007 210 905

## Description

### Field of the Invention

The invention is generally related to vehicle tracking, more specifically for tracking and recording positions of service vehicles.

### Backaround of the Invention

An on-site customer service system may send service vehicles to several customers in a given day, and the service schedule for a given vehicle may be altered many times as the day progress. The miles travelled and the time spent on any given service call is charged to the customer requesting the service. Historically, the service technician operating the vehicle would manually record an estimate of miles travelled and time spent on each call, and this record would serve as the basis for billing each customer for the call.

This method is imprecise. Service technicians may be significantly inaccurate in their time and distance estimates, and may choose not to report time correctly. Miles driven that are uncharged translate into unrecovered expenses, while overcharges can result in a customer service issue. Inaccurate reporting of service call activity is therefore a significant obstacle to efficient, quality service calls.

Self-reporting also makes it difficult to supervise service technicians, who may arrive late to service requests, use the service vehicle for personal reasons, operate the vehicle impermissibly such as by exceeding the speed limit, and engage in other impermissible activities on company time and with company equipment. On the road and outside the office environment it can be much harder to detect and correct this sort of behavior.

A system and method is therefore needed that can more accurately track service calls and service vehicle movement.

US-A-2001/0039509 discloses a system for tracking a vehicle for the purpose of billing an operator of the vehicle for parking, pollution generation or vehicle usage.

WO-A-2009/025789 discloses a system for determining when a vehicle has been attacked or disabled, as well as for detecting unsafe driver behavior.

WO-A-2001/046710 discloses a fleet management system for tracking vehicles in a fleet.

US-A-2007/0210905 discloses a system for tracking usage of a fleet of trucks/trailers for maintenance purposes.

US-A-6,006,148 discloses a system for automating return of a rental car and tracking usage of the rental car for the purposes of billing a customer for use of the rental car.

### Summary of the Invention

The invention relates to a method in accordance with claim 1, to a method in accordance with claim 5, and to a system in accordance with claim 7.

Dependent claims refer to preferred embodiments of the invention.

The invention addresses these and other drawbacks associated with the prior art by providing an event-driven system and method to track a vehicle by using a mobile tracking device disposed on the vehicle to determine a location of the vehicle at a plurality of times, detect an event for the vehicle from at least one of the determined locations, and transmit a location of the vehicle to a remote device in response to detecting the event. Detecting the event may involve comparing two or more of the locations in order to determine at least one of the speed and direction of movement of the vehicle. The types of events that may be tracked include, for example, a vehicle stopping, resuming motion, changing direction, or exceeding a speed such as a speed limit. In addition, in some embodiments, these steps may be carried out by a mobile communications device.

Consistent with one aspect of the invention, a method for determining a service cost for a service call may include identifying a vehicle stop or trip event from a plurality of locations, wherein each location is associated with a time and generated by an event-driven mobile tracking device disposed on a vehicle used in performing the service call, associating an event duration or distance with the identified event, and automatically determining an amount to charge a customer for the service call based on the identified event and the associated duration or distance. The method may also include associating the identified event with the service call and basing the amount to charge the customer for the service call on the nature of the service call or the identity of the customer.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

### Brief Description of the Drawings

FIGURE 1 is a partial view of a lock box containing a mobile tracking device in accordance with the present invention
FIGURE 2 is a block diagram of a mobile tracking device in accordance with the present invention.
FIGURE 3 is a block diagram of a computer tracking system in accordance with the present invention.

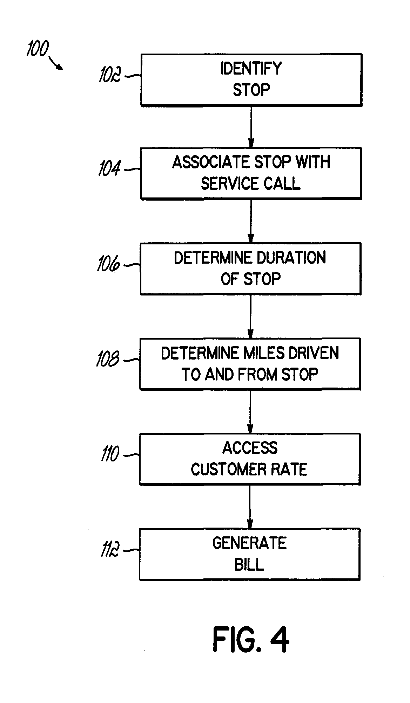

FIGURE 4 is a flowchart illustrating a billing method in accordance with the present invention.

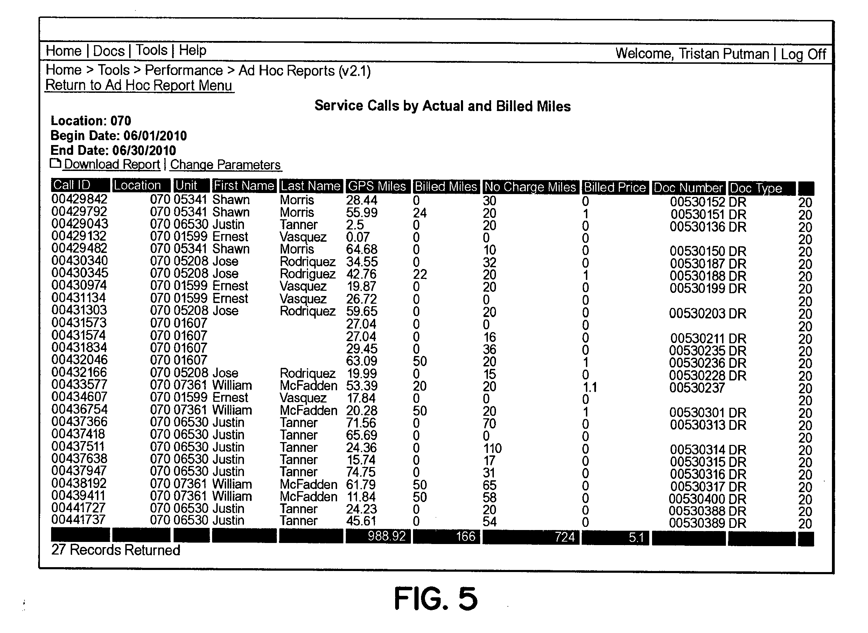

FIGURE 5 is a display screen showing mobile vehicle tracking reports in accordance with the present invention.

### Detailed Description

A GPS tracking device is affixed to a service vehicle and reports vehicle movements to a vehicle tracking system. Certain events associated with vehicle movement, including speed and direction changes, trigger the device to report the vehicle's location to the vehicle tracking system. The vehicle tracking system may store the transmitted data and use it to report on the vehicle's movements and to automatically generate customer billing on the basis of the vehicle's activities relative to service calls.

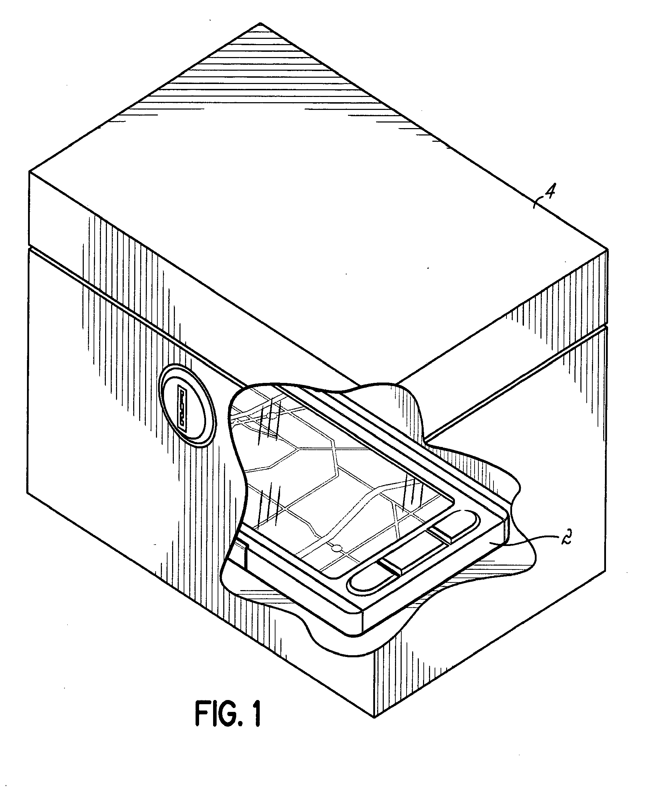

Turning now to the figures, FIG. 1 is an exemplary mobile tracking device in accordance with one embodiment of the invention. A mobile communication device 2 is placed within a secure box 4, which may be a lockbox for which the service technician operating the vehicle is not permitted access. In one embodiment, the mobile communication device 2 may be a mobile phone including a GPS receiver and custom software for receiving and sending GPS location information. It will be appreciated, however, that other mechanical mechanisms for restricting access to device 2 may be used in the alternative.

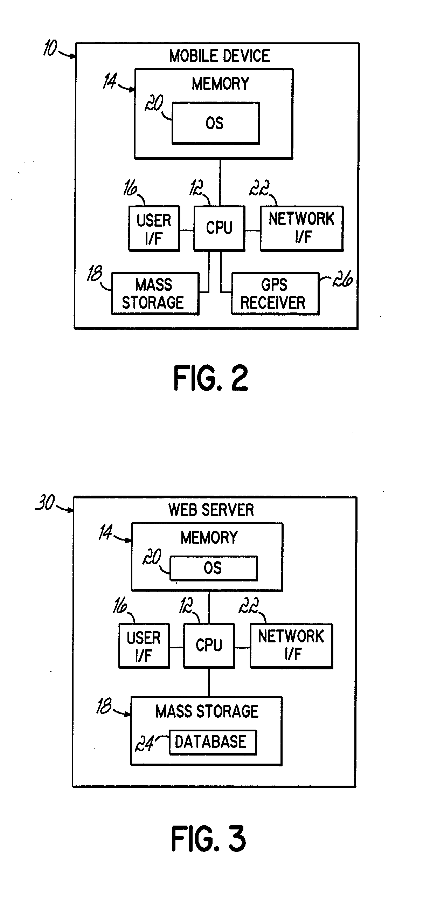

FIG. 2 illustrates a mobile tracking device 10 in accordance with one embodiment of the invention. The device 10 includes a processing unit 12 in communication with memory 14, a user interface 16, and a mass storage device 18. The device 10 may include an operating system 20 which allows the device to carry out the operations described herein. Although a user interface 16 is shown, the interface 16 may be completely or partially disabled in order to limit a service technician's ability to tamper with the device 10. Normal operation of the mobile tracking device 10 may not require any user of the user interface 16 but rather communication may be entirely carried out through the network interface 22 as further described below.

In one embodiment, the device is a mobile communications device such as a mobile phone. The device includes a network interface 22, configured to interact with a mobile service network under an agreement with a mobile service provider as known in the art. The mobile device 10 may interface with the mobile service network with any network protocol known in the art - for example, any 2G, EDGE, 3G, LTE or other 4G network protocol may be used. Current mobile devices are often sophisticated and include the ability to use a variety of protocols as available. Many mobile communications devices of the sort represented by a mobile phone use a duplex antenna interface between a large base antenna and an antenna embedded within the chassis of the mobile device 10.

In an alternate embodiment, the mobile tracking device 10 may be a mobile device that reports tracking signals through some means other than a mobile service network, such as through radio signals directly to a base station or through some other communications network such as wireless LAN. Wirelessly transmitting signals through a variety of telecommunications techniques is known in the art.

Signals indicating the location of the mobile tracking device 10 are sent by means of the network interface 22 to the tracking system, which in one embodiment may be responsible for tracking multiple service vehicles at any given time. As shown in FIG. 2, a computer 30 capable of storing the status of each vehicle in, for example, a database 24 may receive the signals through its own network interface 22. The network interface may be configured to receive signals as a web server over the internet, or may be configured to receive signals through a mobile service network, or any other means as known in the art.

For the purposes of the invention, computer 30 may represent practically any type of computer, computer system, or other suitable programmable electronic device consistent with the invention. Moreover, computer 30 may be implemented using one or more networked computers, e.g., in a cluster or other distributed computing system.

Computer 30 typically includes a central processing unit 12 including at least one microprocessor coupled to memory 14, which may represent the random access memory (RAM) devices comprising the main storage of computer, as well as any supplemental levels of memory, e.g., cache memories, non-volatile or backup memories (e.g., programmable or flash memories), read-only memories, etc. In addition, memory 14 may be considered to include memory storage physically located elsewhere in computer 30, e.g., any cache memory in a processor in CPU 12, as well as any storage capacity used as a virtual memory, e.g., as stored on a mass storage device 18 or on another computer coupled to computer 30. Computer 30 also typically receives a number of inputs and outputs for communicating information externally. For interface with a user or operator, computer 30 typically includes a user interface 16 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 30 may also include one or more mass storage devices 18, e.g., a floppy or other removable disk drive, a hard disk drive, a direct access storage device (DASD), an optical drive (e.g., a CD drive, a DVD drive, etc.), and/or a tape drive, among others. Furthermore, computer 30 includes an interface 22 with one or more networks (e.g., a LAN, a WAN, a wireless network, and/or the Internet, among others) to permit the communication of information with other computers and electronic devices. It should be appreciated that computer 30 typically includes suitable analog and/or digital interfaces between CPU 12 and each of components 14, 16, 18, 22 as is well known in the art.

The mobile tracking device 10 includes a GPS receiver 26 which is capable of receiving location information as known in the art. In one embodiment, the GPS receiver receives GPS signals and location information on a regular basis. Each location is associated with a time and stored. In one embodiment, mass storage 18 may be used to store a list of location information with their associated times.

Through processing by the CPU 12 of executables in memory 14, using data collected by the GPS receiver 26 and stored in memory 14 or mass storage device 16, the mobile device can perform any number of calculations on a set of recent location data. For example, known calculations in the art use GPS locations, along with their timestamps, to calculate the speed and direction of travel of a vehicle. Typically, if these GPS locations are reported to a remote location, they are reported on a periodic or time basis, e.g., every N seconds or minutes. In the illustrated embodiments, on the other hand, these calculations can be used to detect an event of interest, so that the reporting of GPS locations is performed on an event-driven basis.

Events of interest may include the following:
Vehicle stops. The vehicle's speed is below a threshold, for instance below 2 mph, for at least an established interval of time.
Vehicle resumes. The vehicle's speed increases from below a "stopped" threshold to above another threshold, for instance above 10 mph.
Vehicle turns. The vehicle's heading changes more than an established angle, for instance more than 45 degrees, from a previously established heading.
Vehicle speeds. The vehicle's speed increases to above a set threshold, for example above 104.58 km an hour. The threshold may be location-dependent. For example, the mobile tracking device may include a map which has speed limits associated with various routes, and the threshold may be set to the speed limit when known.

The mobile tracking device 10 may be set to transmit location data to the tracking system 30 in response to the detection of an event. Additionally, the mobile tracking device 10 may continue to transmit location data during an ongoing event and cease transmitting once the event has lapsed. For example, the mobile tracking device may continue to transmit location data as long as the vehicle is speeding but cease transmission once the vehicle's speed returns below the speed threshold, or to report another event to report that the vehicle is no longer speeding.

In addition to above event-based transmissions, the mobile tracking device may also transmit its location after a set interval where no events were detected. For example, after four hours in which the device did not transmit a location, the device may transmit a location.

The tracking system records data from each tracking device, associating the received data with the appropriate vehicle. The data may be stored in any appropriate memory location, including a database 24 in mass storage device 18 or as any part of memory 14. Once the data is received, the tracking system can then making accurate billing decisions in accordance with the actual data, as illustrated in the flowchart 100 of FIG. 3. Stops reported by the tracking device (block 102) can be matched to service calls on the basis of proximity to the known location of the customer, or on the basis of the time of the call compared with the known schedule of the service technician (block 104). Time stamps on transmitted data associated with stop events and resume events allows the system to calculate the duration of the stop (block 106). When a stop is successfully associated with a given call, miles driven before and after that stop can also be associated with the call (block 108). By associating the stop with a listed service call and therefore a listed customer, the system can access the mileage and hourly rate associated with that customer (block 110). In another embodiment, the mileage and hourly rates for a given service call are universal and discounts are applied later in the billing process, so no customized rate information is accessed. Using mileage and hourly rates along with the mileage and time of the service call, a bill can be automatically generated on the basis of the tracking data (block 112).

The tracking system may be able to report data in a variety of ways. A daily summary may list all vehicles, giving total mileage, driving time, and number of stops for each vehicle. A trips report may list each driving event separately with start and stop times, duration and mileage. A stops report may list the time, address, and duration of each stop. An after-hours report may list vehicles that ran outside of an established time window, with the time and mileage that each vehicle ran.

The tracking system may also allow for GPS navigation functionality, allowing a user of the tracking system to determine suggested routes between stops, comparing the suggested routes to the routes taken by drivers, and estimating required miles and duration on the basis of the suggested routes. This allows for billing estimates and also benchmarks against which a driver's actual performance can be evaluated.

The tracking system can also alert the user on the basis of criteria such as speeding, stops exceeding a given duration, unauthorized stops, unauthorized trips, and deviations from suggested route, and other unauthorized activities.

For maintenance purposes, the system can maintain a running total of miles for each vehicle, adding to the cumulative mileage each time it creates a report that includes additional vehicle miles. In one embodiment, the running total accrues following vehicle maintenance and can be reset to zero each time maintenance is performed.

Other modifications will be apparent to one of ordinary skill in the art, as will other potential applications of the techniques described herein.

## Claims

1. A method for determining a service cost for a service call, the method comprising:
receiving a plurality of locations, wherein each location is associated with a time and generated by an event-driven mobile tracking device (10) disposed on a service vehicle used by a service technician in performing the service call;
identifying at least one of a vehicle stop event and a vehicle trip event from the plurality of locations;
associating at least one of an event duration and an event distance with the identified event; and
without intervention of a user, automatically determining an amount to charge a customer for the service call based on the identified event and the associated at least one of event duration and event distance.

2. The method of claim 1, wherein the event-driven mobile tracking device (10) comprises a mobile phone (2) disposed in a secure container (4) that restricts access to the mobile phone (2) by the service technician, the method further comprising:
determining the plurality of locations using a GPS receiver (26) of the mobile phone (2);
detecting an event for the service vehicle from at least one of the plurality of locations using the mobile tracking device (10); and
transmitting a location of the service vehicle among the plurality of locations to a remote device using the mobile tracking device (10) in response to detecting the event.

3. The method of claim 2, wherein the event is one of the vehicle stopping, the vehicle resuming motion, the vehicle changing direction, and the vehicle exceeding a speed.

4. The method of claim 3, wherein the event of the vehicle exceeding a speed is the vehicle exceeding a reference speed associated with a legal speed limit.

5. The method of claim 1, further comprising associating the identified event with the service call, wherein the amount to charge the customer is based on the identity of the customer.

6. A system for determining a service cost for a service call, wherein the system is configured to:
receive a plurality of locations, wherein each location is associated with a time and generated by an event-driven mobile tracking device (10) disposed on a service vehicle used by a service technician in performing the service call; identify at least one of a vehicle stop event and a vehicle trip event from the plurality of locations;
associate at least one of an event duration and an event distance with the identified event; and
without intervention of a user, automatically determine an amount to charge a customer for the service call based on the identified event and the associated at least one of event duration and event distance duration or distance.

7. The system of claim 6, wherein the event-driven mobile tracking device (10) comprises a mobile phone (2) disposed within a secure container (4) that restricts access to the mobile phone (2) by the service technician, the mobile phone (2) including a GPS receiver (26) configured to determine the plurality of locations.

## Patentansprüche

1. Verfahren zur Ermittlung von Servicekosten für einen Serviceeinsatz, wobei das Verfahren umfasst:
Empfangen einer Vielzahl von Positionen, wobei jede Position einer Zeit zugeordnet ist und durch eine ereignisgesteuerte mobile Ortungsvorrichtung (10) generiert wird, die an einem Servicefahrzeug angeordnet ist, das von einem Servicetechniker bei der Durchführung des Serviceeinsatzes benutzt wird;
Identifizieren von mindestens einem eines Fahrzeug-Halteereignisses und eines Fahrzeug-Fahrtereignisses aus der Vielzahl von Positionen;
dem identifizierten Ereignis Zuordnen von mindestens einem einer Ereignisdauer und eines Ereignisabstandes; und
ohne Dazwischentreten eines Benutzers automatisch Ermitteln eines Betrags, um einem Kunden den Serviceeinsatz auf Basis des identifizierten Ereignisses und des zugeordneten mindestens einen von Ereignisdauer und Ereignisabstand in Rechnung zu stellen.

2. Verfahren nach Anspruch 1, wobei die ereignisgesteuerte mobile Ortungsvorrichtung (10) ein Mobiltelefon (2) umfasst, das in einem Sicherheitsbehälter (4) angeordnet ist, der Zugang zu dem Mobiltelefon (2) durch den Servicetechniker einschränkt, wobei das Verfahren weiter umfasst:
Ermitteln der Vielzahl von Positionen unter Verwendung eines GPS-Empfängers (26) des Mobiltelefons (2);
Erfassen eines Ereignisses für das Servicefahrzeug aus mindestens einer der Vielzahl von Positionen unter Verwendung der mobilen Ortungsvorrichtung (10); und
Übertragen einer Position des Servicefahrzeugs von der Vielzahl von Positionen zu einer entfernt befindlichen Vorrichtung unter Verwendung der mobilen Ortungsvorrichtung (10) in Reaktion auf das Erfassen des Ereignisses.

3. Verfahren nach Anspruch 2, wobei das Ereignis eines ist des Anhaltens des Fahrzeugs, Wiederanfahrens des Fahrzeugs, Richtungswechsels des Fahrzeugs und Überschreitens einer Geschwindigkeit durch das Fahrzeug.

4. Verfahren nach Anspruch 3, wobei das Ereignis des Überschreitens einer Geschwindigkeit durch das Fahrzeug das Überschreiten einer Referenzgeschwindigkeit, die einer gesetzlichen Höchstgeschwindigkeit zugeordnet ist, durch das Fahrzeug ist.

5. Verfahren nach Anspruch 1, weiter das Zuordnen des identifizierten Ereignisses zu dem Serviceeinsatz umfassend, wobei der dem Kunden in Rechnung zu stellende Betrag auf der Identität des Kunden basiert ist.

6. System zur Ermittlung von Servicekosten für einen Serviceeinsatz, wobei das System dazu konfiguriert ist:
eine Vielzahl von Positionen zu empfangen, wobei jede Position einer Zeit zugeordnet ist und durch eine ereignisgesteuerte mobile Ortungsvorrichtung (10) generiert wird, die an einem Servicefahrzeug angeordnet ist, das von einem Servicetechniker bei der Durchführung des Serviceeinsatzes benutzt wird;
mindestens eines eines Fahrzeug-Halteereignisses und eines Fahrzeug-Fahrtereignisses aus der Vielzahl von Positionen zu identifizieren;
dem identifizierten Ereignis mindestens eines einer Ereignisdauer und eines Ereignisabstandes zuzuordnen; und
ohne Dazwischentreten eines Benutzers automatisch einen Betrag zu ermitteln, um einem Kunden den Serviceeinsatz auf Basis des identifizierten Ereignisses und des zugeordneten mindestens einen von Ereignisdauer und Ereignisabstand in Rechnung zu stellen.

7. System nach Anspruch 6, wobei die ereignisgesteuerte mobile Ortungsvorrichtung (10) ein Mobiltelefon (2) umfasst, das in einem Sicherheitsbehälter (4) angeordnet ist, der Zugang zu dem Mobiltelefon (2) durch den Servicetechniker einschränkt, wobei das Mobiltelefon (2) einen GPS-Empfänger (26) beinhaltet, der zur Ermittlung der Vielzahl von Positionen konfiguriert ist.

## Revendications

1. Procédé pour déterminer le coût d'un service pour un appel de service, le procédé comprenant le fait de :
recevoir plusieurs positions, chaque position étant associée à un moment et étant générée par un dispositif mobile de suivi (10) entraîné par un événement, disposé sur un véhicule de service utilisé par un technicien de service qui répond à un appel de service ;
identifier au moins un événement d'arrêt de véhicule et un événement de déplacement de véhicule à partir de plusieurs positions ;
associer au moins un élément choisi parmi le groupe comprenant une durée d'événement et une distance d'événement à l'événement identifié ; et
sans l'intervention d'un utilisateur, déterminer de manière automatique le montant qui doit être facturé à un client pour l'appel de service en se basant sur l'événement identifié et sur ledit au moins un élément associé choisi parmi le groupe comprenant une durée d'événement et une distance d'événement.

2. Procédé selon la revendication 1, dans lequel le dispositif mobile de suivi (10) entraîné par un événement comprend un téléphone mobile (2) disposé dans un conteneur sécurisé (4) qui restreint au technicien de service l'accès au téléphone mobile (2), le procédé comprenant en outre le fait de :
déterminer lesdites plusieurs positions en utilisant un récepteur GPS (26) du téléphone mobile (2) ;
détecter un événement pour le véhicule de service à partir d'au moins une desdites positions en utilisant le dispositif mobile de suivi (10) ; et
transmettre une position du véhicule de service parmi lesdites plusieurs positions à un dispositif à distance en utilisant le dispositif mobile de suivi (10) en réponse à la détection de l'événement.

3. Procédé selon la revendication 2, dans lequel l'événement représente un événement choisi parmi l'arrêt d'un véhicule, la remise en mouvement d'un véhicule, le changement de direction d'un véhicule et le dépassement d'une vitesse par un véhicule.

4. Procédé selon la revendication 3, dans lequel l'événement concernant le dépassement d'une vitesse par le véhicule représente le fait que le véhicule dépasse une vitesse de référence associée à une limite de vitesse légale.

5. Procédé selon la revendication 1, comprenant en outre l'association de l'événement identifié à l'appel de service, le montant à facturer au client étant basé sur l'identité du client

6. Système pour déterminer le coût d'un service pour un appel de service, dans lequel le système est configuré pour :
recevoir plusieurs positions, chaque position étant associée à un moment et étant générée par un dispositif mobile de suivi (10) entraîné par un événement, disposé sur un véhicule de service utilisé par un technicien de service qui répond à un appel de service ;
identifier au moins un événement d'arrêt de véhicule et un événement de déplacement de véhicule à partir de plusieurs positions ;
associer au moins un élément choisi parmi le groupe comprenant une durée d'événement et une distance d'événement à l'événement identifié ; et
sans l'intervention d'un utilisateur, déterminer de manière automatique le montant qui doit être facturé à un client pour l'appel de service en se basant sur l'événement identifié et sur ledit au moins un élément associé choisi parmi le groupe comprenant une durée d'événement et une distance d'événement.

7. Système selon la revendication 6, dans lequel le dispositif mobile de suivi (10) entraîné par un événement comprend un téléphone mobile (2) disposé dans un conteneur sécurisé (4) qui restreint au technicien de service l'accès au téléphone mobile (2), le téléphone mobile (2) englobant un récepteur GPS (26) qui est configuré pour déterminer lesdites plusieurs positions.
